# FASCICULE DE BREVET EUROPEEN

(11) **EP 4 136 381 B1**
(45) Date de publication et mention de la délivrance du brevet: **10.01.2024**
(21) Numéro de dépôt: 21725973.8
(22) Date de dépôt: 14.04.2021
(51) Int. Cl.: F17C 1/16

(54) **PROCEDE DE REALISATION D'UN RESERVOIR DE STOCKAGE COMPOSITE**
VERFAHREN ZUR HERSTELLUNG EINES VERBUNDSPEICHERTANKS
PROCESS FOR MANUFACTURING A COMPOSITE STORAGE TANK

(30) Priorité: 15.04.2020 FR 2003799
(43) Date de publication de la demande: 22.02.2023
(73) Titulaire: Centre Technique Des Industries Mecaniques, 60300 Senlis (FR)
(72) Inventeur: GUILLON, Damien, 44200 Nantes (FR); BRIANÇON, Christophe, 44830 Bouaye (FR); ESPINASSOU, Denis, 85600 Treize-Septiers (FR); PICHON, Pierre, 44100 Nantes (FR); JURAS, Laurent, 44700 Orvault (FR); MASTAIN, Didier, 44640 Saint-Jean-de-Boiseau (FR)
(74) Mandataire: Fédit-Loriot
(86) Numéro de dépôt international: PCT/FR2021/050653
(87) Numéro de publication internationale: WO 2021/209714

(56) Documents cités:
- EP-A1- 2 949 449
- EP-A2- 2 571 671
- EP-B1- 2 571 671
- EP-B1- 2 949 449
- WO-A1-2014/139531
- US-A- 2 479 828
- US-A- 2 744 043

## Description

La présente invention se rapporte à un procédé de réalisation d'un réservoir de stockage de fluide sous pression. US2744043A divulgue un tel procédé.

Un domaine d'application envisagé est notamment, mais non exclusivement, celui du stockage de l'hydrogène sous pression pour des véhicules automobiles aptes à fonctionner avec ce carburant.

Des procédés de fabrication de réservoir de stockage connus, mettent en oeuvre des tubes en matériau composite dont les extrémités sont équipées de dispositifs de bouchage. Les tubes sont par exemple réalisés dans une matrice en matériau polymère de type thermodurcissable renforcée par des fibres de verre. Une couche imperméable est installée à l'intérieur des tubes et les dispositifs de bouchage sont rapportés par l'extérieur.

On pourra se rapporter au document US10465848, lequel décrit notamment la réalisation d'un réservoir à partir de trois tubes en matériau composite réunis ensemble par deux dispositifs de bouchage opposés et des éléments de liaison de ces deux dispositifs de bouchage pour assurer la rigidité du montage. Ce dernier est relativement complexe.

Il a également été imaginé de réaliser des réservoirs de stockage d'une seule pièce en partant d'une enveloppe étanche rigide cylindrique et en enroulant autour un ruban composite. Ce dernier est fait de fibres imprégnées d'une résine thermoplastique par exemple, et il est enroulé hélicoïdalement d'une seule pièce autour de l'enveloppe en réalisant une pluralité de spires jointives et de spires superposées de manière à former une couche composite.

Pour ce faire, l'enveloppe étanche est installée entre deux mandrins et une tête d'application portée par un robot vient appliquer le ruban contre l'enveloppe à mesure qu'elle est entraînée en rotation.

Le document EP 2 949 449 A1 décrit un tel réservoir et son procédé de fabrication.

Les contraintes mécaniques qui s'exercent sur un tel type de réservoir en service sont différentes, entre les extrémités arrondies du réservoir et le centre cylindrique, bien que la paroi du réservoir soit sensiblement uniforme.

De plus, l'enveloppe étanche présente au moins une ouverture pratiquée dans l'une de ses extrémités. Cette ouverture est équipée d'un embout plus ou moins proéminent, lequel vient perturber le mouvement relatif de la tête d'application et de l'enveloppe. Partant, il est malaisé de réaliser des spires jointives aux extrémités de l'enveloppe.

Aussi, un problème qui se pose et que vise à résoudre la présente invention est de fournir un procédé de réalisation d'un réservoir de stockage de fluide sous pression qui soit plus aisé à mettre en oeuvre et qui soit moins coûteux.

Dans ce but, il est proposé un procédé de réalisation d'un réservoir de stockage de fluide sous pression, comprenant les étapes suivantes : a) on fournit une enveloppe étanche rigide de révolution comportant deux extrémités opposées arrondies et au moins une ouverture ménagée dans l'une desdites deux extrémités opposées ; b) on fournit un ruban composite comprenant un matériau polymère thermoplastique et un matériau fibreux noyé dans ledit matériau polymère ; c) on provoque la fusion du matériau polymère dudit ruban et on enroule hélicoïdalement ledit ruban autour de ladite enveloppe étanche en réalisant une pluralité de spires jointives et de spires superposées de manière à former une couche composite autour de ladite enveloppe étanche. Et avant l'étape c) : on fournit en outre une calotte rigide; et, on vient coiffer l'une desdites extrémités opposées arrondies de ladite enveloppe avec ladite calotte rigide.

Ainsi, une caractéristique de l'invention réside dans la mise en oeuvre d'au moins une calotte rigide que l'on rapporte sur l'une des extrémités arrondies de l'enveloppe pour pouvoir ensuite enrouler hélicoïdalement le ruban autour de l'enveloppe et de la calotte rigide. L'enveloppe étanche rigide est par exemple réalisée dans un matériau polymère. Le point de fusion de ce polymère est préférentiellement supérieur à celui du polymère du ruban composite. Et la calotte rigide est par exemple collée sur l'extrémité arrondie de l'enveloppe.

Préférentiellement, on fournit une calotte rigide comprenant un autre matériau polymère thermoplastique. La calotte rigide est alors réalisée dans un matériau polymère thermoplastique qui n'est pas nécessairement le même que celui du ruban.

En outre, et de façon particulièrement avantageuse, ledit autre matériau polymère thermoplastique est renforcé de fibres.

De la sorte, en réalisant une calotte rigide composite avec des fibres de renfort orientées dans des directions données, on vient alors renforcer mécaniquement l'extrémité du réservoir de stockage. De surcroît, il est possible de diminuer le nombre de couches de ruban sur la partie de l'enveloppe étanche rigide comprise entre les deux extrémités, laquelle partie est moins sollicitée mécaniquement. Partant, on diminue le temps de réalisation du réservoir et conséquemment, son coût de fabrication.

De plus, il est impératif de prévoir des zones privilégiées de percement du réservoir en cas de surpression, de manière à éviter l'éjection violente des extrémités. Aussi, grâce à la calotte composite on crée un chemin de fuite fusible précisément entre la calotte composite et les enroulements hélicoïdaux du ruban comme on l'expliquera ci-après.

Par ailleurs, et selon un mode de réalisation de l'invention particulièrement avantageux, ledit un matériau polymère thermoplastique dudit ruban et ledit autre matériau polymère thermoplastique de ladite calotte sont identiques. De la sorte, lorsque le ruban composite est appliqué sur la calotte composite, on provoque à la fois la fusion du polymère du ruban et de celui de la calotte. Partant, les deux polymères diffusent aisément l'un dans l'autre et s'interpénètrent de manière à assurer une parfaite solidarisation du ruban et de la calotte près retour à la température ambiante. On observera que la calotte composite peut être solidarisée à l'enveloppe en portant le polymère qui la constitue en fusion également.

Selon un mode de mise en oeuvre de l'invention particulièrement avantageux, ladite enveloppe étanche présentant une ouverture ménagée dans l'une desdites extrémités, ladite calotte rigide présente un orifice central, et on vient coiffer ladite une desdites extrémités avec ladite calotte rigide de façon que ladite au moins une ouverture s'étende en regard dudit orifice central.

Ainsi, l'enveloppe étanche présente une ouverture équipée usuellement d'un embout et la calotte rigide présente un orifice central que vient précisément traverser l'embout. Partant, on peut prévoir une calotte rigide qui vient s'ajuster précisément autour de l'embout sans qu'il soit nécessaire de venir enrouler le ruban hélicoïdalement près de l'embout. De la sorte, on facilite la trajectoire de la tête d'application du ruban durant son enroulement autour de l'enveloppe.

Avantageusement, on enroule hélicoïdalement ledit ruban autour de ladite enveloppe étanche à distance dudit orifice central de ladite calotte composite. Ainsi, grâce à la calotte on peut venir enrouler le ruban hélicoïdalement à distance de l'orifice central et par conséquent, à distance de l'embout, sans pour autant obérer la résistance mécanique du réservoir.

Préférentiellement, on fournit une calotte rigide de symétrie sphérique. Ainsi, la calotte forme un segment sphérique et les contraintes mécaniques qui s'exercent alors sur le réservoir sont relativement homogènes.

De plus, on fournit en outre et de façon particulièrement avantageuse, une autre calotte rigide et on coiffe l'autre desdites extrémités arrondies de ladite enveloppe avec ladite autre calotte rigide. De la sorte, on facilite l'enroulement du ruban composite autour de l'enveloppe à hauteur de l'autre des extrémités arrondies. Préférentiellement, l'autre des extrémités arrondies est également équipée d'une ouverture et d'un embout associé, de sorte que l'autre calotte rigide présente également un orifice central pour le passage de l'embout.

Selon un autre mode de mise en oeuvre, l'autre extrémité arrondie est dépourvue d'ouverture et il n'est nul besoin de prévoir un orifice central dans la calotte rigide.

Par ailleurs, ladite autre calotte rigide peut être réalisée dans un matériau thermoplastique du même type que celui de ladite une calotte rigide et/ou du même type que celui du ruban composite.

Selon une variante de réalisation de l'invention, on fournit une calotte rigide réalisée à partir d'un autre ruban composite comprenant ledit autre matériau polymère thermoplastique, ledit autre ruban composite étant enroulé autour d'une portion de surface convexe. Ainsi, on réalise la calotte rigide composite sur un support convexe grâce à la tête d'application mise en oeuvre pour réaliser le réservoir de stockage selon l'invention ou à une tête d'application du même type.

Selon une autre variante de réalisation de l'invention, on fournit une calotte rigide réalisée à partir d'une préforme composite thermoformée dans une empreinte convexe. Ainsi, on réalise tout d'abord une préforme composite à plat. Puis on insère la préforme dans un moule de thermoformage pour conformer la calotte. Il est alors aisé de prévoir des fibres de renfort façonnées dans un textile. On augmente par là-même la résistance mécanique de la calotte rigide composite.

Selon encore une autre variante de réalisation, on fournit une calotte rigide comprenant des fibres de renfort étendues radialement à l'intérieur dudit autre matériau polymère thermoplastique. De la sorte, on obtient une résistance mécanique de l'extrémité du réservoir de stockage précisément selon des directions radiales.

En outre, à l'étape a), on fournit préférentiellement une enveloppe étanche de symétrie cylindrique. L'enveloppe étanche est ainsi essentiellement cylindrique, tandis que les deux extrémités opposées demeurent arrondies.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une vue schématique partielle axiale d'une installation permettant la mise en oeuvre du procédé selon invention ;
[Fig. 2] est une vue schématique partielle d'un élément permettant de mettre oeuvre le procédé selon l'invention ;
[Fig. 3] est une vue schématique de côté d'un réservoir en cours de réalisation selon le procédé conforme invention ; et,
[Fig. 4] est une vue schématique partielle en coupe axiale d'un réservoir obtenu selon le procédé conforme à l'invention ;

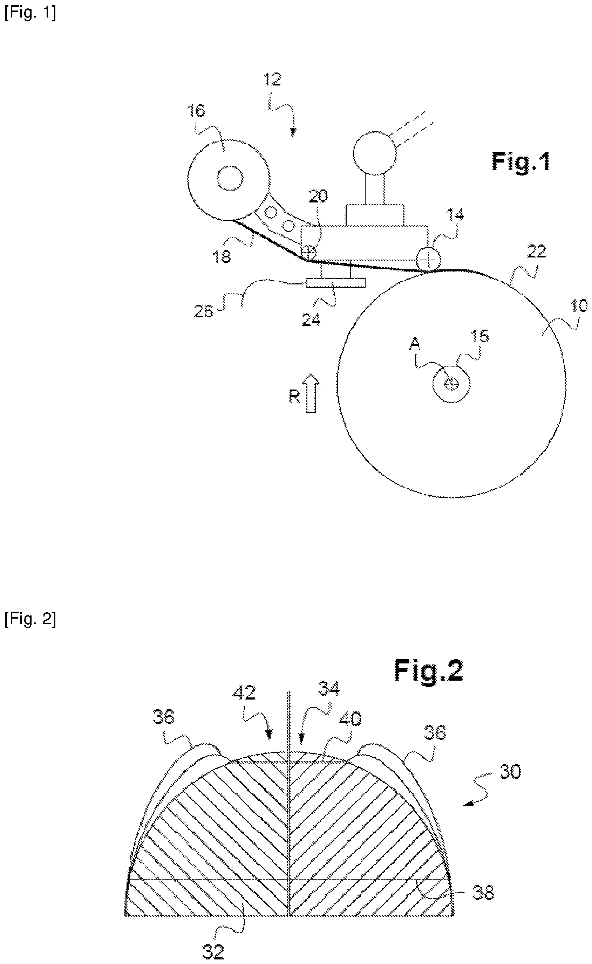

La figure [Fig. 1] montre en coupe radiale, une enveloppe étanche rigide de révolution 10 et une tête d'application 12 s'étendant transversalement par rapport à l'enveloppe 10, et portée par un robot non représenté.

On observera que l'enveloppe étanche rigide 10 est ici munie de deux embouts 15 installés respectivement dans ses deux extrémités opposées. Et ces deux embouts sont maintenus en prise dans deux mandrins opposés coaxiaux, non représentés.

La tête d'application 12 comprend à l'une de ses extrémités, un galet d'appui 14, tandis qu'à l'opposé, elle comprend une bobine de réception 16. Le galet d'appui 14 est ici porté en appui contre l'enveloppe étanche rigide de révolution 10 et son axe de rotation est ici sensiblement incliné par rapport à l'axe de rotation A de l'enveloppe 10 comme on l'expliquera ci-après.

Sur la bobine de réception 16, est enroulé un ruban composite thermoplastique 18 renforcé ici de fibres de verre longitudinales. Le ruban composite thermoplastique 18 présente une matrice polymère, par exemple en polyamide. D'autres polymères thermoplastiques peuvent être avantageusement mis en oeuvre, par exemple le Polyétheréthercétone (PEEK) ou bien encore le Polyéthercétonecétone (PEKK). La bobine de réception 16 présente un axe de rotation parallèle à l'axe du galet d'appui 14, et le ruban composite thermoplastique 18 s'étend de la bobine de réception 16, jusqu'au galet d'appui 14 par l'intermédiaire d'un galet de renvoi 20. Ainsi, le ruban composite thermoplastique 18 est ici pressé à plat contre la surface externe 22 de l'enveloppe 10 par l'intermédiaire du galet d'appui 14. Aussi, l'enveloppe 10 est adaptée à être entraînée en rotation, autour de son axe longitudinal, selon le sens horaire R tel que représenté sur la figure [Fig. 2]. Partant, le ruban composite thermoplastique 18 peut venir s'enrouler sur la surface externe 22, tandis que la bobine de réception 16 se dévide dans le sens anti-horaire AR.

Par ailleurs, la tête d'application 12 comporte un dispositif laser 24 permettant de focaliser un rayon laser guidé par une fibre optique 26, dans l'angle formé par le ruban composite thermoplastique 18 et la surface externe 22 de l'enveloppe 10, en amont du galet d'appui 14. Le dispositif laser 24 permet alors de fournir de l'énergie thermique au ruban thermoplastique 18 de manière à ce que la matrice polymère thermoplastique puisse être portée en fusion, comme on va l'expliquer ci-après.

Par ailleurs, on observera que le dispositif laser 24 permet également de fournir de l'énergie thermique aux couches de ruban composite 18 précédemment enroulées.

Aussi, comme on l'expliquera ci-après, on forme une couche composite autour de l'enveloppe étanche 10 en entraînant en mouvement la tête d'application 12 et l'enveloppe étanche 10 l'une par rapport à l'autre en formant des spires jointives et des spires superposées.

Avant de décrire plus en détail le procédé selon invention, on se rapportera sur la figure [Fig. 2], laquelle illustre la conformation d'une calotte rigide composite 30. On observera que la calotte rigide n'est pas nécessairement réalisée dans un matériau composite comme on l'expliquera ci-après.

Telle que représentée sur la figure [Fig. 2] celle-ci est conformée sur un support de moulage 32 présentant une surface convexe 34 et en l'espèce sphérique. On vient ainsi appliquer sur cette surface convexe 34, des fractions 36 de ruban composite du type précité. Le support de moulage 32 est par exemple maintenu en position fixe, et grâce à une tête d'application du type précité, installée sur un robot et équipée d'une bobine de ruban composite, on vient déposer successivement sur le support de moulage 32, une pluralité de fractions de ruban entrecroisées et superposées. Les fractions de ruban 36 sont chauffées, autrement dit le polymère thermoplastique qui les constitue devient visqueux et il adhère, tout d'abord à la surface convexe 34 puis ensuite aux couches sous-jacentes, au fur et à mesure de la superposition des couches. On garnit ainsi la surface convexe 34 entre une grande corde 38 voisine du diamètre du support de moulage 32 et une petite corde 40, parallèle à la grande corde 38 et voisine du sommet. De la sorte, on réalise une calotte rigide de symétrie sphérique, ou segment sphérique, présentant un orifice central 42.

Avantageusement, on garnit la surface convexe 34 de manière à obtenir une épaisseur décroissante de calotte rigide 30, du sommet vers la grande corde 38. Autrement dit, l'épaisseur de la calotte rigide composite décroît de l'orifice central 42 vers son bord circulaire de grand diamètre. Ainsi, et comme on l'expliquera ci-après, on peut obtenir une couche d'épaisseur sensiblement constante sur toute la surface de l'enveloppe 10.

Par ailleurs, grâce au support de moulage 32 il est également possible de conformer une calotte composite recouvrant la surface convexe 34 entre la grande corde 38 et le sommet de manière continue, sans laisser le sommet à découvert. La calotte rigide composite alors obtenue est dépourvue d'orifice central. On expliquera ci-après l'utilité d'une telle calotte rigide composite.

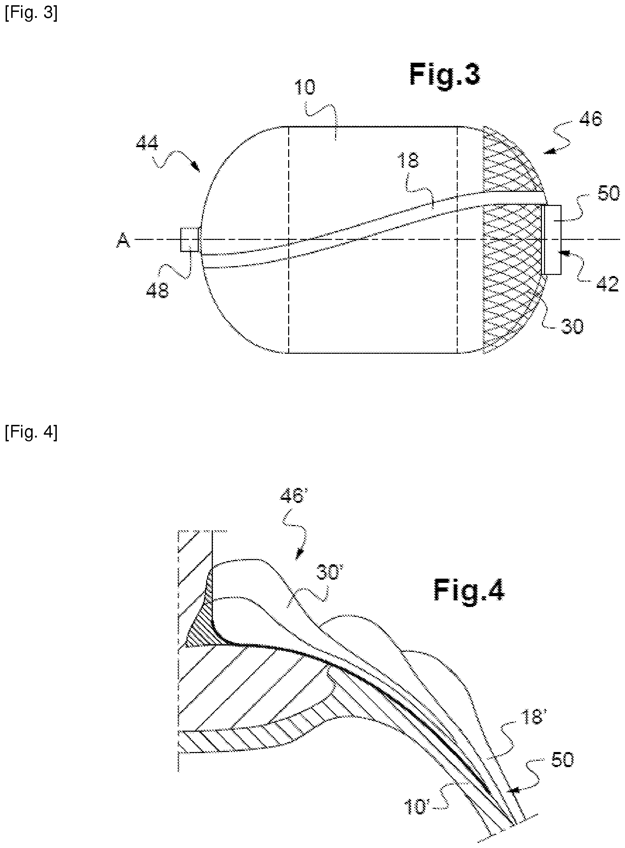

On se reportera sur la figure [Fig. 3], laquelle illustre vu de côté, l'enveloppe étanche rigide 10. Elle présente deux extrémités opposées arrondies 44, 46. On observera que l'enveloppe étanche rigide 10 présente une partie centrale 45 de symétrie cylindrique, tandis que les deux extrémités opposées arrondies 44, 46 sont de symétrie sphérique. L'une des extrémités arrondies 44 présente une petite ouverture axiale munie d'un petit embout 48, tandis que l'autre extrémité arrondie 46 présente une grande ouverture axiale munie d'un grand embout 50.

Par ailleurs, la calotte rigide composite 30 telle que réalisée ci-dessus est rapportée sur l'enveloppe étanche rigide 10 pour venir coiffer l'extrémité arrondie 46. Le grand embout 50 vient alors s'étendre à travers l'orifice central 42 de la calotte rigide composite 30. En outre, l'intérieur de la calotte rigide composite 30 a été soumis au préalable à un rayonnement infrarouge de manière à ce que le matériau polymère soit à tout le moins partiellement en fusion. Partant, lorsque la calotte composite 30 vient coiffer l'extrémité arrondie 46 elle vient adhérer à la surface de l'enveloppe 10. Lorsque le matériau polymère en se refroidissant redevient rigide, la calotte composite 30 devient alors solidaire de l'extrémité arrondie 46 de l'enveloppe 10.

Sur la figure [Fig. 3], les deux mandrins permettant d'entraîner séquentiellement l'enveloppe étanche rigide 10 en rotation autour de l'axe A et la tête d'application n'apparaissent pas à des fins de simplification. Toutefois, c'est grâce à eux, que l'on vient enrouler hélicoïdalement le ruban composite 18 autour de l'enveloppe 10 en constituant un enroulement primaire. Sur la figure, une seule portion de ruban composite est représentée.

Ainsi, on enroule tout d'abord le ruban composite 18 autour de l'enveloppe étanche rigide 10 suivant des plans moyens dits : « plans axiaux » de manière à former des spires qui se croisent au niveau des extrémités arrondies 44, 46 et qui viennent recouvrir la calotte rigide composite 30. Ces plans moyens axiaux sont inclinés faiblement par rapport à l'axe de rotation A autour duquel est entraîné l'enveloppe étanche rigide 10. Ils sont par exemple inclinés d'un angle inférieur à 30°.

Par ailleurs, sur la figure [Fig. 3], on observera que le ruban composite 18 vient recouvrir la calotte rigide composite 30, en venant tangenter le grand embout 50. Toutefois, il est tout à fait possible de s'en écarter et c'est d'ailleurs un avantage de la mise en oeuvre de la calotte rigide composite 30. Généralement, le ruban composite 18 ne peut être appliqué très près du grand embout 50, ou de l'orifice central 42 qu'il traverse, à cause de l'encombrement de la tête d'application du ruban composite.

Partant, la calotte rigide composite 30 permet de pallier ce déficit de ruban composite dans l'extrémité arrondie 46 au voisinage de l'orifice central 42.

Par ailleurs, lorsque la calotte rigide composite 30 présente une épaisseur décroissante entre son orifice central 42 et son bord circulaire de grand diamètre, on enroule hélicoïdalement le ruban composite 18 de manière à diminuer le nombre de superpositions du ruban composite 18 à mesure que l'on se rapproche de l'orifice central 42. De la sorte, on obtient une couche composite d'épaisseur sensiblement constante dans l'extrémité de l'enveloppe.

Ensuite, après avoir enroulé hélicoïdalement le ruban composite 18 selon des plans « axiaux », on vient enrouler circonférentiellement le ruban composite 18 selon des spires jointives sur la partie cylindrique de l'enveloppe étanche rigide 10 de manière à parfaire l'enroulement primaire et former une couche composite homogène autour de lui.

De surcroît, la calotte rigide composite 30 permet de renforcer l'extrémité arrondie 46 du réservoir ainsi formé, précisément à l'endroit où les efforts qu'il subit sont les plus importants.

Selon un autre mode de mise en oeuvre, une autre calotte rigide composite vient coiffer l'autre extrémité arrondie 44 de manière à venir la renforcer et aussi, à obtenir un parfait recouvrement de l'enveloppe rigide 10.

On se reportera à présent sur la figure [Fig. 4], sur laquelle on retrouve en coupe partielle hémi-axiale un réservoir de stockage de fluide sous pression conforme à l'invention. Les éléments de la figure, identiques à ceux de la figure [Fig. 3] porteront des références analogues affectées d'un signe prime : « ' ». Ainsi, on retrouve l'enveloppe étanche rigide 10' dont l'extrémité arrondie 46' est coiffée d'une calotte rigide composite 30'. Cette dernière est elle-même partiellement recouverte par des rubans composites 18' pour former une couche homogène.

Aussi, on observera que la mise en oeuvre du procédé selon l'invention permet de créer un chemin de fuite 50 entre la calotte rigide 30' et l'enroulement primaire des rubans composites 18'.

Ainsi, la calotte rigide 30' est parfaitement maintenue et bloquée en position fixe grâce à l'enroulement primaire des rubans composites 18' et elle ne risque pas d'être éjectée en cas de surpression. En revanche, la jonction entre le bord de la calotte rigide 30' et l'enroulement primaire, de moindre résistance, permet cet échappement en cas de surpression.

## Revendications

1. Procédé de réalisation d'un réservoir de stockage de fluide sous pression, comprenant les étapes suivantes :
a) on fournit une enveloppe étanche rigide (10) de révolution comportant deux extrémités opposées arrondies (44, 46) et au moins une ouverture ménagée dans l'une desdites deux extrémités opposées (46) ;
b) on fournit un ruban composite (18) comprenant un matériau polymère thermoplastique et un matériau fibreux noyé dans ledit matériau polymère ;
c) on provoque la fusion du matériau polymère dudit ruban (18) et on enroule hélicoïdalement ledit ruban autour de ladite enveloppe étanche (10) en réalisant une pluralité de spires jointives et de spires superposées de manière à former une couche composite autour de ladite enveloppe étanche (10) ;
**caractérisé en ce qu'**avant l'étape c) on fournit en outre une calotte rigide (30) et on vient coiffer l'une desdites extrémités opposées arrondies (46) de ladite enveloppe avec ladite calotte rigide (30).

2. Procédé de réalisation d'un réservoir de stockage selon la revendication 1, **caractérisé en ce qu'**on fournit une calotte rigide (30) comprenant un autre matériau polymère thermoplastique.

3. Procédé de réalisation d'un réservoir de stockage selon la revendication 2, **caractérisé en ce que** ledit un matériau polymère thermoplastique dudit ruban (18) et ledit autre matériau polymère thermoplastique de ladite calotte (30) sont identiques.

4. Procédé de réalisation d'un réservoir de stockage selon l'une quelconque des revendications 1 à 3, **caractérisé en ce que**, ladite enveloppe étanche (10) présentant une ouverture ménagée dans l'une desdites extrémités (46), ladite calotte rigide (30) présente un orifice central (42), et **en ce qu'**on vient coiffer ladite une desdites extrémités (46) avec ladite calotte rigide (30) de façon que ladite au moins une ouverture s'étende en regard dudit orifice central (42).

5. Procédé de réalisation d'un réservoir de stockage selon la revendication 4, **caractérisé en ce qu'**on enroule hélicoïdalement ledit ruban (18) autour de ladite enveloppe étanche (10) à distance dudit orifice central (42) de ladite calotte rigide (30).

6. Procédé de réalisation d'un réservoir de stockage selon l'une quelconque des revendications 1 à 5, **caractérisé en ce qu'**on fournit une calotte rigide (30) de symétrie sphérique.

7. Procédé de réalisation d'un réservoir de stockage selon l'une quelconque des revendications 1 à 6, **caractérisé en ce qu'**on fournit en outre une autre calotte rigide et on coiffe l'autre desdites extrémités arrondies de ladite enveloppe avec ladite autre calotte rigide.

8. Procédé de réalisation d'un réservoir de stockage selon l'une quelconque des revendications 1 à 7, **caractérisé en ce qu'**on fournit une calotte rigide (30) réalisée à partir d'un autre ruban composite comprenant ledit autre matériau polymère thermoplastique, ledit autre ruban composite étant enroulé autour d'une portion de surface convexe (34).

9. Procédé de réalisation d'un réservoir de stockage selon l'une quelconque des revendications 1 à 7, **caractérisé en ce qu'**on fournit une calotte rigide réalisée à partir d'une préforme composite thermoformée dans une empreinte convexe.

10. Procédé de réalisation d'un réservoir de stockage selon l'une quelconque des revendications 1 à 9, **caractérisé en ce qu'**on fournit une calotte rigide (30) comprenant des fibres de renfort étendues radialement à l'intérieur dudit autre matériau polymère thermoplastique.

11. Procédé de réalisation d'un réservoir de stockage selon l'une quelconque des revendications 1 à 10, **caractérisé en ce qu'**à l'étape a), on fournit une enveloppe étanche cylindrique (10).

## Patentansprüche

1. Verfahren zur Herstellung eines Speichertanks für Druckfluid, das die folgenden Schritte umfasst:
a) Bereitstellen einer starren, dichten Drehhülle (10), die zwei abgerundete gegenüberliegende Enden (44, 46) und mindestens eine Öffnung umfasst, die in einem der zwei gegenüberliegenden Enden (46) ausgestaltet ist;
b) Bereitstellen eines Verbundbandes (18), das ein thermoplastisches Polymermaterial und ein in das Polymermaterial eingebettetes Fasermaterial umfasst;
c) Bewirken des Schmelzens des Polymermaterials des Bandes (18) und spiralförmiges Wickeln des Bandes um die dichte Hülle (10) unter Herstellen einer Vielzahl von aneinanderstoßenden Windungen und übereinanderliegenden Windungen, sodass eine Verbundschicht um die dichte Hülle (10) gebildet wird;
**dadurch gekennzeichnet, dass** vor dem Schritt c) weiter eine starre Kalotte (30) bereitgestellt und eines der abgerundeten gegenüberliegenden Enden (46) der Hülle mit der starren Kalotte (30) bedeckt wird.

2. Verfahren zur Herstellung eines Speichertanks nach Anspruch 1, **dadurch gekennzeichnet, dass** eine starre Kalotte (30) bereitgestellt wird, die ein anderes thermoplastisches Polymermaterial umfasst.

3. Verfahren zur Herstellung eines Speichertanks nach Anspruch 2, **dadurch gekennzeichnet, dass** das eine thermoplastische Polymermaterial des Bandes (18) und das andere thermoplastische Polymermaterial der Kalotte (30) identisch sind.

4. Verfahren zur Herstellung eines Speichertanks nach einem der Ansprüche 1 bis 3, **dadurch gekennzeichnet, dass** wenn die dichte Hülle (10) eine Öffnung aufweist, die in einem der Enden (46) ausgestaltet ist, die starre Kalotte (30) eine zentrale Öffnung (42) aufweist, und dadurch, dass das eine der Enden (46) so mit der starren Kalotte (30) bedeckt wird, dass sich die mindestens eine Öffnung der zentralen Öffnung (42) zugewandt erstreckt.

5. Verfahren zur Herstellung eines Speichertanks nach Anspruch 4, **dadurch gekennzeichnet, dass** das Band (18) in Abstand von der zentralen Öffnung (42) der starren Kalotte (30) spiralförmig um die dichte Hülle (10) gewickelt wird.

6. Verfahren zur Herstellung eines Speichertanks nach einem der Ansprüche 1 bis 5, **dadurch gekennzeichnet, dass** eine kugelsymmetrische starre Kalotte (30) bereitgestellt wird.

7. Verfahren zur Herstellung eines Speichertanks nach einem der Ansprüche 1 bis 6, **dadurch gekennzeichnet, dass** weiter eine andere starre Kalotte bereitgestellt und das andere der abgerundeten Enden der Hülle mit der anderen starren Kalotte bedeckt wird.

8. Verfahren zur Herstellung eines Speichertanks nach einem der Ansprüche 1 bis 7, **dadurch gekennzeichnet, dass** eine starre Kalotte (30) bereitgestellt wird, die aus einem anderen Verbundband hergestellt ist, das das andere thermoplastische Polymermaterial umfasst, wobei das andere Verbundband um einen konvexen Oberflächenabschnitt (34) gewickelt wird.

9. Verfahren zur Herstellung eines Speichertanks nach einem der Ansprüche 1 bis 7, **dadurch gekennzeichnet, dass** eine starre Kalotte bereitgestellt wird, die aus einem in einer konvexen Form thermogeformten Verbundvorform hergestellt wird.

10. Verfahren zur Herstellung eines Speichertanks nach einem der Ansprüche 1 bis 9, **dadurch gekennzeichnet, dass** eine starre Kalotte (30) bereitgestellt wird, die sich radial im Inneren des anderen thermoplastischen Polymermaterials erstreckende Verstärkungsfasern umfasst.

11. Verfahren zur Herstellung eines Speichertanks nach einem der Ansprüche 1 bis 10, **dadurch gekennzeichnet, dass** in Schritt a) eine zylinderförmige dichte Hülle (10) bereitgestellt wird.

## Claims

1. A method for making a pressurised fluid storage tank, comprising the following steps:
a) providing an axisymmetric rigid sealed shell (10) including two opposite rounded ends (44, 46) and at least one opening arranged in one of said two opposite ends (46) ;
b) providing a composite tape (18) comprising a thermoplastic polymer material and a fibrous material embedded in said polymer material;
c) causing the melting of the polymer material of said tape (18) and helically winding said tape around said sealed shell (10) by making a plurality of contiguous turns and superposed turns so as to form a composite layer around said sealed shell (10);
**characterised by**, before step c), further providing a rigid cap (30) and capping one of said opposite rounded ends (46) of said shell being with said rigid cap (30).

2. The method for making a storage tank according to claim 1, **characterised by** providing a rigid cap (30) comprising another thermoplastic polymer material.

3. The method for making a storage tank according to claim 2, **characterised in that** said thermoplastic polymer material of said tape (18) and said other thermoplastic polymer material of said cap (30) are identical.

4. The method for making a storage tank according to any one of claims 1 to 3, **characterised in that**, said sealed shell (10) having an opening arranged in one of said ends (46), said rigid cap (30) has a central orifice (42), and **in that** said one of said ends (46) is capped with said rigid cap (30) so that said at least one opening extends opposite said central orifice (42).

5. The method for making a storage tank according to claim 4, **characterised by** helically wounding said tape (18) around said sealed shell (10) at a distance from said central orifice (42) of said rigid cap (30).

6. The method for making a storage tank according to any one of claims 1 to 5, **characterised by** providing a spherically-symmetric rigid cap (30).

7. The method for making a storage tank according to any one of claims 1 to 6, **characterised by** further providing another rigid cap and the other one of said rounded ends of said shell being capped with said other rigid cap.

8. The method for making a storage tank according to any one of claims 1 to 7, **characterised by** providing a rigid cap (30) made from another composite tape comprising said other thermoplastic polymer material, said other composite tape being wound around a convex surface portion (34).

9. The method for making a storage tank according to any one of claims 1 to 7, **characterised by** providing a rigid cap made from a thermoformed composite preform in a convex cavity.

10. The method for making a storage tank according to any one of claims 1 to 9, **characterised by** providing a rigid cap (30) comprising reinforcing fibres extended radially inside said other thermoplastic polymer material.

11. The method for making a storage tank according to any one of claims 1 to 10, **characterised by** providing, in step a), a cylindrical sealed shell (10).
